# EUROPEAN PATENT SPECIFICATION

(11) **EP 3 533 993 B1**
(45) Date of publication and mention of the grant of the patent: **16.06.2021**
(21) Application number: 19158251.9
(22) Date of filing: 20.02.2019
(51) Int. Cl.: F02N 11/04, F02N 19/00, F02P 5/04, H02P 9/48, H02P 21/00, F02N 3/00, F02N 3/04, F02N 11/08, F02P 7/067, F02P 5/15, F02D 41/06, F02D 41/34, F02D 41/00

(54) **METHOD FOR CONTROLLING AN ENGINE UNIT FOR A STRADDLED VEHICLE, ENGINE UNIT AND STRADDLED VEHICLE**
VERFAHREN ZUR STEUERUNG EINER MOTOREINHEIT FÜR EIN GRÄTSCHSITZFAHRZEUG, MOTOREINHEIT UND GRÄTSCHSITZFAHRZEUG
PROCÉDÉ DE COMMANDE D'UNE UNITÉ DE MOTEUR POUR VÉHICULE À ENFOURCHER, UNITÉ DE MOTEUR ET VÉHICULE À ENFOURCHER

(30) Priority: 02.03.2018 JP 2018037717; 02.03.2018 JP 2018037718; 08.03.2018 JP 2018042068
(43) Date of publication of application: 04.09.2019
(73) Proprietor: YAMAHA HATSUDOKI KABUSHIKI KAISHA, Iwata-shi, Shizuoka 438-8501 (JP)
(72) Inventor: IDE, Keisuke, Iwata-shi Shizuoka 438-8501 (JP); NISHIKAWA, Takahiro, Iwata-shi Shizuoka 438-8501 (JP)
(74) Representative: Grünecker Patent- und Rechtsanwälte PartG mbB

(56) References cited:
- EP-A1- 3 064 748
- WO-A1-2016/203596
- GB-A- 2 404 461

## Description

The present invention relates to a method for controlling an engine unit for a straddled vehicle, an engine unit and a straddled vehicle.

Prior art document WO 2016/203596 A1 discloses an engine unit for a vehicle that comprises an engine having a crankshaft and an electric component. A motor is power-transmittably coupled to the crankshaft and used in common as a starter motor for rotating the crankshaft and as a generator for generating electric power by a rotating force of the crankshaft. An inverter controls a current flowing between a power supply line and the motor. When the starter switch is turned on DC power is received from the battery and the engine connected to the motor is rotated, thereby starting the engine. In the case of performing kick drive for the engine by a user, when the main switch is turned on and the machine is rotated by kicking, voltage is supplied to the control circuit via the main switch. In particular, a three-phase bridge circuit is controlled to perform rectification control for the AC power supplied from the motor that is rotated by kicking, and DC power output from between one end and an other end of the three-phase bridge circuit is supplied to the load via an output terminal, fuse, and load terminal. Consequently, the engine is started.

JP 3778342 B discloses a starter-generator (ACG) installed in a scooter type motorcycle engine. The ACG has a stator, with three-phase windings wound around it, and an outer rotor, coupled to an end portion of a crankshaft of the engine. When starting the engine, the ACG functions as a synchronous motor and is driven by electric power supplied from a battery to rotate the crankshaft and start the engine. After the start, the ACG functions as a synchronous generator and charges the battery with a current that is generated and supplies the current to electric components. The ACG is controlled by an ECU. The ECU includes a full-wave rectifier for rectifying the three-phase AC generated by the ACG, a regulator for limiting an output of the full-wave rectifier to a regulated voltage, and a power generation controller. When an engine speed is in a power generation control region that is set in a low rotation region, the power generation controller performs control of increasing a power generation amount, specifically, a lag energization control. The power generation controller performs lag energization such that the output voltage of the full-wave rectifier falls within a predetermined voltage range of not more than the regulated voltage. It is thereby attempted to avoid sudden change of an engine load due to actuation of the regulator in the low rotation region. The power generation control region is specifically a region of 1000 rpm to 3500 rpm.

When a battery degrades and decreases significantly in charging capacity, engine start by a starter motor becomes impossible. In preparation for such a case, a straddled vehicle includes, in some cases, a manual starter. A typical example of a manual starter is a kick starter. The kick starter includes a kick arm, which a user is able to operate by foot, and a transmission device for converting a force applied to the kick arm to a rotating force and transmitting it to a crankshaft.

By operating the kick starter, the crankshaft rotates, and by a generator being driven by the crankshaft, electric power is generated. The electric power is used to enable electric components of an engine to be actuated and the engine to be started.

However, a power generation capability of a rotating electrical machine, used in common as a starter motor and a generator, is not necessarily sufficient and there are cases where it is difficult to obtain electric power for starting the engine by the kick starter.

Especially, with a straddled vehicle, an installation space for the rotating electrical machine is small, and there is a large restriction to a size of the rotating electrical machine. To increase the power generation capability under this restriction, stator windings must be increased in number of turns and therefore the windings must be made thin. On the other hand, to increase a driving torque in use as a starter motor, a winding structure enabling a large amount of current to flow is necessary and therefore it is preferable to make the windings thick and the number of turns low. The driving torque and the power generation capability are thus in a trade-off relationship. The driving torque must be determined such as to enable passing of a compression top dead center when the engine is started. The power generation capability is thereby restricted. Therefore, it may not be possible to obtain the electric power necessary for the engine start by the kick starter.

JP 3778342 B does not mention manual start and therefore does not mention the problem described above and obviously does not provide a solution for the problem. In particular, a rotational speed of the crankshaft when the kick starter is used is far lower than the power generation control region (for example, of 1000 rpm to 3500 rpm) of JP 3778342 and is at most approximately 700 rpm on the average. Therefore, even if the kick starter is incorporated in the configuration of JP 3778342B, the lag energization control does not begin. That is, the power generation is only consequential and dependent on rectification by a parasitic diode of an FET (field-effect transistor) constituting the full-wave rectifier. A DC voltage obtained by such power generation is not capable of maintaining a sufficient value over a period sufficient for the engine start. A similar engine starting method is shown in EP3064748A1.

It is the object the present invention to provide a method for controlling an engine unit for a straddled vehicle, an engine unit and a straddled vehicle that is capable of facilitating engine start by an external force other than a rotating force of a rotating electrical machine.

According to the present invention said object is solved by a method for controlling an engine unit for a straddled vehicle having the features of independent claim 1. Moreover, said object is also solved by an engine unit according to claim 5. Moreover, said object is also solved by a straddled vehicle according to claim 7. Preferred embodiments are laid down in the dependent claims.

A preferred embodiment provides an engine unit to be installed in a straddled vehicle. The engine unit includes an engine having a cylinder, a crankshaft, and an electric component. The engine unit includes a rotating electrical machine that is power-transmittably coupled to the crankshaft and that is used in common as a starter motor for rotating the crankshaft and as a generator for generating electric power by a rotating force of the crankshaft. Further, the engine unit includes a power supply line that is connected to a battery included in the straddled vehicle, and that is connected to the electric component. Also, the engine unit includes an inverter that includes a plurality of switching devices for controlling a current flowing between the power supply line and the rotating electrical machine. Also, the engine unit includes a controller for controlling the engine and the inverter. The controller executes a power generation control of controlling the plurality of switching devices of the inverter to make the rotating electrical machine perform power generation. When the crankshaft is rotated by an external force other than a rotating force of the rotating electrical machine with the engine being in a stop state, the controller executes the power generation control in a start power generation region, in which a rotational speed of the crankshaft is not more than a cranking rotational speed in rotation by the rotating electrical machine.

Due to there being limited installation space in the straddled vehicle, the rotating electrical machine that is used in common as the starter motor and the generator is required to be configured as compactly as possible. Due to this requirement, a power generation performance when using the rotating electrical machine as the generator would become insufficient, especially in a low rotation region, if an attempt is made to secure a driving torque required to use the rotating electrical machine as the starter motor. When attempting to start the engine by the external force other than the rotating force of the rotating electrical machine, it is not possible to rotate the crankshaft at as high a speed as the rotating electrical machine is capable of. It is therefore preferable to improve startability in such circumstances.

Thus, with the present preferred embodiment, the controller executes the power generation control in the start power generation region in which the rotational speed of the crankshaft is not more than the cranking rotational speed enabled by the rotating electrical machine. Efficient power generation is thereby enabled even when the rotational speed of the crankshaft is low. Specifically, control of the switching devices of the inverter enables a comparatively high voltage to be led out continuously to the power supply line even when the rotational speed of the crankshaft is low. The electric power generated by the rotating electrical machine is supplied to the electric component of the engine through the power supply line. This enables the engine to be started. Facilitation of the engine start by the external force other than the rotating force of the rotating electrical machine is thus enabled.

In a preferred embodiment, the power generation control includes a vector control of controlling the plurality of switching devices included in the inverter by a vector control method to boost the voltage generated by the rotating electrical machine and lead out the thus boosted voltage, to the power supply line. The power generation by the vector control method (so-called sine wave power generation) enables highly efficient power generation even when the rotational speed of the crankshaft is low.

In a preferred embodiment, the power generation control includes a phase control of controlling the plurality of switching devices included in the inverter by a phase control method. Power generation by the phase control method also enables highly efficient power generation even when the rotational speed of the crankshaft is low.

In a preferred embodiment, the power generation control includes a vector control of controlling the plurality of switching devices included in the inverter by a vector control method to boost the voltage generated by the rotating electrical machine and lead out the thus boosted voltage, to the power supply line and a phase control of controlling the plurality of switching devices included in the inverter by a phase control method. The controller switches from the vector control to the phase control in response to the rotational speed of the crankshaft reaching a control method changing threshold that is greater than the cranking rotational speed, or exceeding the control method changing threshold.

In comparing the vector control method and the phase control method, the vector control method is higher in power generation efficiency. Thus, when the rotational speed of the crankshaft reaches the control method changing threshold or exceeds the control method changing threshold, switching from the vector control method to the phase control method is performed. When the crankshaft is rotating at high speed, a need to boost the voltage generated by the rotating electrical machine decreases and the voltage may even need to be dropped. The phase control method is thus more appropriate in a high rotation region. On the other hand, the start power generation region is a region of not more than or less than the cranking rotational speed that is lower than the control method changing threshold, and therefore when the crankshaft is rotated by the external force other than the rotating force of the rotating electrical machine, the power generation control by the vector control method is performed. This enables the electric power generated by the rotating electrical machine to be used efficiently to facilitate the engine start.

In a preferred embodiment, the controller executes, in a period immediately after the engine begins combustion when the engine is started by drive of the rotating electrical machine, a start assist control of continuing the drive of the rotating electrical machine to assist the rotation of the crankshaft until a running state of the engine reaches a predetermined stable state. The controller does not perform the start assist control when the engine is started by the crankshaft being rotated by the external force other than the rotating force of the rotating electrical machine.

The start assist control, of continuing the drive of the rotating electrical machine even after the engine begins the combustion, promptly stabilizes a combustion state of the engine immediately after the start. However, the start assist control consumes electric power of the battery. When the start by rotation of the crankshaft by the external force other than the rotating force of the rotating electrical machine is attempted, it may be considered that the battery is degraded and significantly decreased in its charging capacity. Therefore, in such a case, avoiding of further depletion of the battery is enabled by not performing the start assist control.

In a preferred embodiment, when the engine is started by the drive of the rotating electrical machine with the engine being in the stop state, the controller begins the power generation control in response to the rotational speed of the crankshaft reaching an ordinary power generation beginning threshold, determined to be not less than the cranking rotational speed in rotation by the rotating electrical machine, or exceeding the ordinary power generation beginning threshold.

With this configuration, when the engine is started by the crankshaft being rotated by the rotating force of the rotating electrical machine, the power generation control is begun when the rotational speed of the crankshaft reaches the ordinary power generation beginning threshold or exceeds the ordinary power generation beginning threshold. The ordinary power generation beginning threshold is determined to be not less than the cranking rotational speed. Therefore, when the rotating electrical machine is used as the starter motor, the power generation control is begun after the start of the engine is completed. An interference of the drive control of the rotating electrical machine by the power generation control is thereby avoided and smooth start is attained.

In a preferred embodiment, the engine unit includes a manual starter that is configured to apply a rotating force to the crankshaft without driving the rotating electrical machine.

This configuration enables the engine to be started, without having to drive the rotating electrical machine, by using the manual starter. In this case, if the rotational speed of the crankshaft is within the start power generation region, the power generation control is executed, thus facilitating the start of the engine by the manual starter.

Besides using the manual starter, the crankshaft is also rotated by the external force other than the rotating force of the rotating electrical machine when engine start by so-called push start is attempted.

In a preferred embodiment, the electric component includes an ignition device and a fuel supply device. The ignition device may include a spark plug that performs spark discharge inside a combustion chamber of the engine. The fuel supply device may include a fuel injector. The fuel supply device may further include a fuel pump.

With this configuration, the electric power generated by the rotating electrical machine is supplied to the ignition device and the fuel supply device through the power supply line, thus enabling ignition and fuel supply to be performed even when the battery is degraded. This enables the engine to be started and running of the engine to be continued.

In a preferred embodiment, the engine unit includes a rotor that rotates together with the rotation of the crankshaft and an electromagnetic pickup having a detection region in a region through which a plurality of detected portions, arranged at intervals in a rotation direction of the rotor, pass for generating detection signals in accompaniment with passage of the detected portions through the detection region. The power generation control may be executed using the detection signals generated by the electromagnetic pickup.

With this configuration, rotation information of the rotor of the rotating electrical machine, that is, position information of the crankshaft is acquired using the electromagnetic pickup, and therefore the configuration is inexpensive in comparison to a case of using a position sensor, such as a Hall IC. Performing of power generation control is enabled by such an inexpensive configuration, and facilitation of the start performed by rotating the crankshaft by the external force other than the rotating force of the rotating electrical machine is attained.

A preferred embodiment provides a straddled vehicle that includes a straddled vehicle engine unit having features such as described above, a wheel, to which the rotation of the crankshaft is transmitted, and a straddled seat.

This configuration provides the straddled vehicle with which the engine start by the external force other than the rotating force of the rotating electrical machine is easy.

The above and other elements, features, steps, characteristics and advantages of the present teaching will become more apparent from the following detailed description of the preferred embodiments with reference to the attached drawings.

### BRIEF DESCRIPTION OF THE DRAWINGS

FIG. 1 is a side view of an outline of a straddled vehicle.
FIG. 2 is a schematic partial sectional view of the general configuration of an engine unit included in the straddled vehicle.
FIG. 3 is a sectional view of a rotating electrical machine included in the engine unit.
FIG. 4 is a block diagram of the electrical configuration of the straddled vehicle that includes the engine unit.
FIG. 5 is a flowchart for describing an example of engine start control and power generation control of the rotating electrical machine.

### DETAILED DESCRIPTION OF THE PREFERRED EMBODIMENTS

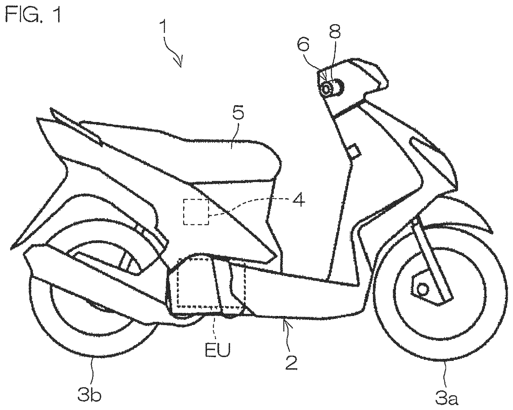

FIG. 1 is a side view of an outline of a straddled vehicle. The straddled vehicle 1 includes an engine unit EU, a body 2, wheels 3a and 3b, a battery 4, and a straddled type seat 5. The engine unit EU, the battery 4, and the seat 5 are supported by the body 2. The wheels 3a and 3b are rotatably supported respectively at a front portion and a rear portion of the body 2. The engine unit EU drives the wheel 3b (the rear wheel in the present preferred embodiment), which is a drive wheel, and makes the wheel 3b rotate to make the straddled vehicle 1 travel. The wheel 3a (front wheel) is a driven wheel in the present preferred embodiment. A handlebar 6, pivotable to the right and left, is supported by the front portion of the body 2. The wheel 3a pivots to the right and left in accordance with the pivoting of the handlebar 6. An accelerator operating member 8 (accelerator grip) is located at one end, the right end in the present preferred embodiment, of the handlebar 6. The accelerator operating member 8 is pivotally operably mounted to an end portion of the handlebar 6. The accelerator operating member 8 is an example of a throttle operating member that is operated by a user to operate a throttle of the engine unit EU.

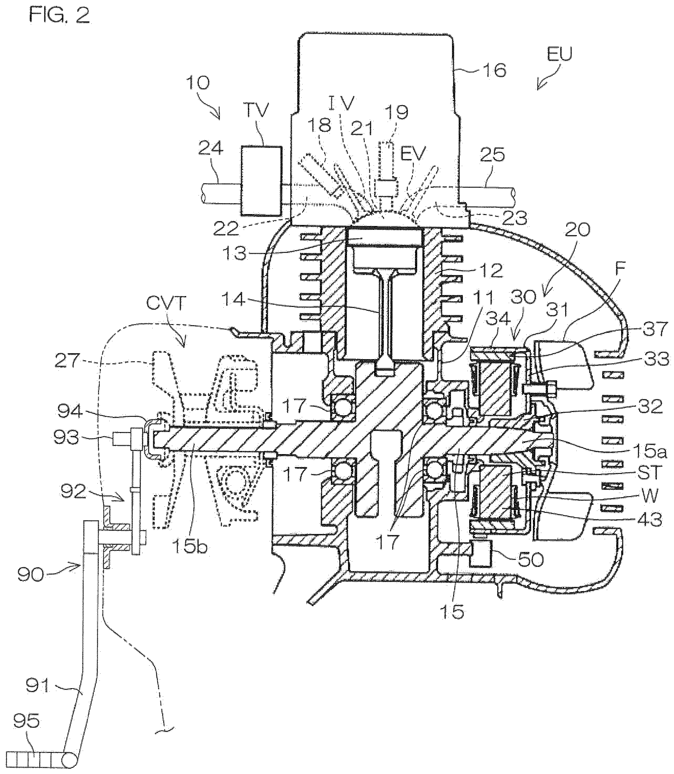

FIG. 2 is a schematic partial sectional view of the general arrangement of the engine unit EU. The engine unit EU is a four-stroke engine unit for vehicle and more specifically is an engine unit installable on the straddled vehicle 1.

The engine unit EU includes a four-stroke, single-cylinder engine 10 and a rotating electrical machine 20. The four-stroke, single-cylinder engine 10 (hereinafter referred to as the "engine 10") is a single-cylinder, four-stroke engine having one cylinder.

The engine 10 includes a crankcase 11, a cylinder 12, a piston 13, a connecting rod 14, and a crankshaft 15.

The piston 13 is provided to be freely reciprocally movable inside the cylinder 12. The crankshaft 15 is provided to be rotatable inside the crankcase 11. The connecting rod 14 connects the piston 13 and the crankshaft 15 and transmits a reciprocating motion of the piston 13 to the crankshaft 15. The crankshaft 15 is freely rotatably supported by the crankcase 11 through a pair of bearings 17.

The rotating electrical machine 20 is mounted to one end portion 15a of the crankshaft 15. The rotating electrical machine 20 is thereby power-transmittably coupled to the crankshaft 15. A transmission CVT is mounted to another end portion 15b of the crankshaft 15. The transmission CVT changes a shift ratio, which is a ratio of an output rotational speed with respect to an input rotational speed.

The other end portion 15b of the crankshaft 15 penetrates through a drive pulley 27 (primary pulley) of the transmission CVT. A kick starter 90 is coupled to a tip of the other end portion 15b. The kick starter 90 includes a kick arm 91 and a reduction gear 92 (transmission device). An output shaft 93 of the reduction gear 92 is coupled to the crankshaft 15 by a coupling 94. When the user steps on and pivotingly operates a pedal portion 95 of the kick arm by a foot, rotation of the kick arm 91 is transmitted to the crankshaft 15 upon being speed-reduced by the reduction gear 92. Manual start of the engine 10 is thereby enabled. That is, the kick starter 90 is an example of a manual starter that applies an external force other than a rotating force of the rotating electrical machine 20 to the crankshaft 15.

A cylinder head 16 is mounted to an upper portion of the cylinder 12. A combustion chamber 21 is defined by the cylinder 12, the cylinder head 16, and the piston 13. The cylinder head 16 is provided with an intake valve IV, a fuel injector 18, a spark plug 19, and an exhaust valve EV. An intake passage 22 and an exhaust passage 23 that are in communication with the combustion chamber 21 are formed in the cylinder head 16. The intake valve IV opens and closes the intake passage 22 and the exhaust valve EV opens and closes the exhaust passage 23.

The fuel injector 18 injects a fuel to supply the fuel into the combustion chamber 21. The intake valve IV controls inflow of air into the combustion chamber 21. The intake valve IV and the exhaust valve EV open and close in accordance with a position of the crankshaft 15. By being put in an opened state, the intake valve IV supplies air containing the fuel to the combustion chamber 21. The spark plug 19 is located to face the combustion chamber 21 and generates a spark discharge inside the combustion chamber 21 to ignite a gaseous mixture of the air and the fuel introduced into the combustion chamber 21. By being put in an opened state, the exhaust valve EV discharges exhaust after combustion from the cylinder 12 to an exhaust pipe 25.

A throttle valve TV is located at an intake pipe 24 connected to the intake passage 22. The throttle valve TV adjusts an amount of the air supplied to the combustion chamber 21. An opening degree of the throttle valve TV is adjusted in accordance with the operation of the accelerator operating member 8 (see FIG. 1).

Once each of an intake stroke, a compression stroke, an expansion stroke, and an exhaust stroke are included in one combustion cycle of the engine 10. In the intake stroke, the intake valve IV is opened and the piston 13 moves toward a bottom dead center. In the meantime, the fuel injector 18 injects the fuel. The gaseous mixture of the air and the fuel is thereby sucked into the combustion chamber 21. In the compression stroke, the piston 13 moves toward a top dead center (compression top dead center) in a state where the intake valve IV is closed and the gaseous mixture inside the combustion chamber 21 is thereby compressed. The spark plug 19 performs spark discharge when the piston 13 is in a vicinity of the compression top dead center position. The gaseous mixture is thereby ignited and expands, causing the expansion stroke of moving the piston 13 toward the bottom dead center. In the exhaust stroke, the exhaust valve EV is opened, the piston 13 moves toward the top dead center (exhaust top dead center), and the exhaust gas is thereby discharged to the exhaust pipe 25.

The engine 10 outputs a rotating force through the crankshaft 15. The rotating force of the crankshaft 15 is transmitted through the transmission CVT to the wheel 3b (see FIG. 1). The straddled vehicle 1 (see FIG. 1) is driven by the wheel 3b that receives the rotating force, output from the engine 10, through the crankshaft 15.

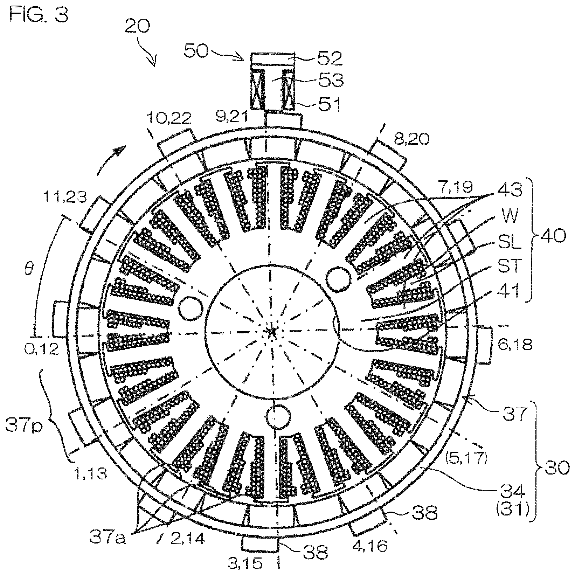

FIG. 3 is a sectional view showing a section perpendicular to a rotational axis of the rotating electrical machine 20 shown in FIG. 2. The rotating electrical machine 20 is a permanent magnet type rotating electrical machine and more specifically is a permanent magnet type three-phase brushless generator. Further, the rotating electrical machine 20 also functions as a permanent magnet type three-phase brushless motor.

The rotating electrical machine 20 has a rotor 30 and a stator 40. The rotating electrical machine 20 is of a radial gap type in the present preferred embodiment. Also, in the present preferred embodiment, the rotating electrical machine 20 is of an outer rotor type. That is, the rotor 30 is an outer rotor and the stator 40 is an inner stator.

As illustrated in FIG. 2 and FIG. 3, the rotor 30 has a rotor main body portion 31. The rotor main body portion 31 is constituted, for example, of a ferromagnetic material. The rotor main body portion 31 is arranged to have a bottomed cylindrical shape. The rotor main body portion 31 has a cylindrical boss portion 32, a disk-shaped bottom wall portion 33, and a cylindrical back yoke portion 34. The bottom wall portion 33 and the back yoke portion 34 are formed integrally. The bottom wall portion 33 and the back yoke portion 34 are fixed to the crankshaft 15 through the cylindrical boss portion 32. The rotor 30 thus rotates together with the crankshaft 15. The rotor 30 is not provided with a winding supplied with an electric current. The bottom wall portion 33 is provided with a cooling fan F.

The rotor 30 has a permanent magnet portion 37. The rotor 30 has a plurality of magnetic pole portions 37a. In the present preferred embodiment, the plurality of magnetic pole portions 37a are formed of the permanent magnet portion 37. The plurality of magnetic pole portions 37a are provided at an inner periphery of the back yoke portion 34. In the present preferred embodiment, the permanent magnet portion 37 has a plurality of permanent magnets. The plurality of magnetic pole portions 37a are respectively provided at the plurality of permanent magnets. The permanent magnet portion 37 may however be formed of one annular permanent magnet instead. In this case, the one permanent magnet is magnetized such that the plurality of magnetic pole portions 37a are aligned along an inner peripheral surface.

The plurality of magnetic pole portions 37a are provided such that N poles and S poles are located alternately on the inner peripheral surface along a peripheral direction of the rotor 30 (more specifically, the back yoke portion 34). Magnetic pole portions 37a that are mutually adjacent in the peripheral direction form a magnetic pole portion pair 37p. In the present preferred embodiment, the number of magnetic poles of the rotor 30 facing the stator 40 is 24. Twelve magnetic pole portion pairs 37p are thus provided. The number of magnetic poles of the rotor 30 refers to the number of magnetic poles facing the stator 40. The permanent magnet of the rotor 30 and the stator 40 face each other across an air gap. The magnetic pole portions 37a are provided at an outer side of the stator 40 in a radial direction of the rotating electrical machine 20. The back yoke portion 34 is provided at outer sides of the magnetic pole portion 37a in the radial direction. The rotating electrical machine 20 has the magnetic pole portions 37a of a larger number than teeth 43 of the stator 40.

The stator 40 has a stator core ST and a plurality of stator windings W. The stator core ST has a plurality of the teeth 43 provided radially at intervals (equal intervals in the present preferred embodiment) in the peripheral direction. The plurality of teeth 43 extend integrally from the stator core ST toward a radially outer side. In the present preferred embodiment, a total of eighteen teeth 43 are provided at intervals in the peripheral direction. Slots SL are formed between adjacent teeth 43. The stator core ST thus has a total of eighteen slots SL formed at intervals in the peripheral direction. As mentioned above, the rotor 30 has the magnetic pole portions 37a of the larger number than the teeth 43. The number of the magnetic pole portions 37a is 4/3 of the number of slots.

The stator windings W are wound around peripheries of the respective teeth 43. That is, the stator windings W of a plurality phases are provided such as to pass through the slots SL. A state where the stator windings W are inside the slots SL is shown in FIG. 3. Each of the stator windings W of the plurality of phases is a winding of any of a U phase, a V phase, and a W phase. The stator windings W are located, for example, such as to be aligned in the order of the U phase, the V phase, and the W phase in the peripheral direction.

A plurality (eleven in the present preferred embodiment) of detected portions 38, for detection of a rotational position of the rotor 30, are provided on an outer surface of the rotor 30. The plurality of detected portions 38 are detected by a magnetic action. The plurality of detected portions 38 are provided on the outer surface of the rotor 30 at intervals in the peripheral direction. The detected portions 38 are formed of a ferromagnetic material.

Numbers "0" to "23," respectively allocated to positions of the eleven detected portions 38 and an omitted position, at which a detected portion 38 is not provided, are shown in FIG. 3. The numbers are allocated for one combustion cycle of the engine 10, that is, for two rotations of the rotor 30, and each expresses a position of the crankshaft 15 in one combustion cycle. Specifically, each of the numbers "0" to "11" expresses a position of the crankshaft 15 in the first rotation and each of the numbers "12" to "23" expresses a position of the crankshaft 15 during the second rotation.

An electromagnetic pickup 50 is used as a rotor position detector that detects the rotational position of the rotor 30. The electromagnetic pickup 50 is provided at a position facing the plurality of detected portions 38. The electromagnetic pickup 50 includes a pickup coil 51 that magnetically detects each detected portion 38. The electromagnetic pickup 50 further includes a detecting magnet 52 and a core 53. When the detected portion 38 of the number "0" passes through a position facing the electromagnetic pickup 50, the crankshaft 15 is at the compression top dead center or a position in a vicinity of the compression top dead center. When the detected portion 38 of the number "12" passes through the position facing the electromagnetic pickup 50, the crankshaft 15 is at the exhaust top dead center or a position in a vicinity of the exhaust top dead center.

The rotating electrical machine 20 is coupled to the crankshaft 15 of the engine 10. Specifically, the rotor 30 is coupled to the crankshaft 15 such as to rotate at a fixed speed ratio with respect to the crankshaft 15.

In the present preferred embodiment, the rotor 30 is mounted to the crankshaft 15 without interposition of a power transmission mechanism (for example, a belt, chain, gear, speed reducer, speed increaser, etc.). The rotor 30 rotates at a speed ratio of 1:1 with respect to the crankshaft 15. The rotating electrical machine 20 is arranged such that the rotor 30 rotates in a forward rotation direction during combustion operation of the engine 10.

In an engine start, the rotating electrical machine 20 functions as a starter motor that rotates the crankshaft 15 in the forward rotation direction to start the engine 10. When the engine 10 performs the combustion operation, the rotating electrical machine 20 functions as a generator that is driven by the engine 10 to generate electric power. That is, the rotating electrical machine 20 has both a function of rotating the crankshaft 15 in the forward rotation direction to start the engine 10 and a function of being driven by the engine 10 to generate electric power when the engine 10 performs the combustion operation.

The rotating electrical machine 20 is driven by a battery 4 (see FIG. 1), included in the straddled vehicle 1, to apply a force for rotation to the crankshaft 15. More specifically, the rotating electrical machine 20 is able to rotatingly drive the crankshaft 15 in the forward rotation direction and rotatingly drive it in a reverse rotation direction. Further, the rotating electrical machine 20 is also enabled to be driven by the battery 4 to apply a force in a direction reverse to the rotation direction of the crankshaft 15, that is, to apply a braking force.

The plurality of detected portions 38 are aligned at intervals along the rotation direction of the rotor 30 on the outer surface of the rotor 30. The electromagnetic pickup 50 has a detection region at the position of successively facing the plurality of detected portions 38 in accompaniment with the rotation of the rotor 30. That is, the electromagnetic pickup 50 is located to face the detection region into which the plurality of detected portions 38 enter successively during the rotation of the rotor 30.

To describe further specifically, the detected portions 38 are provided on the rotor 30 at angular intervals, each of 30 degrees. Alternate long and short dashed lines in FIG. 3 indicate the angular intervals at which the detected portions 38 are provided. Mutually adjacent detected portions 38 are located with respect to each other at the angular interval forming a measurement angle θ. In the present preferred embodiment, the measurement angle θ is 30 degrees.

The electromagnetic pickup 50 detects one of the plurality of detected portions 38 each time the rotor 30 rotates by the measurement angle θ. The electromagnetic pickup 50 outputs a detection signal each time it detects a detected portion 38. More accurately, by a detected portion 38 moving past the detection region, an electromotive force is generated in the pickup coil 51 due to electromagnetic induction, and a detection signal is generated thereby. That is, the electromagnetic pickup 50 outputs the detection signals upon detecting the movement of the detection portions 38 passing through the detection region.

In the present preferred embodiment, each detected portion 38 corresponds to one magnetic pole portion pair 37p. The plurality of detected portions 38 have the same relative positional relationship with respect to the respectively corresponding magnetic pole portion pairs 37p.

In the present preferred embodiment, the eleven detected portions 38 are provided on the rotor 30. The eleven detected portions 38 are respectively provided on the rotor 30 at eleven of the twelve positions located on the rotor 30 at intervals of the measurement angle θ. Specifically, the detected portions 38 are located at the eleven locations of the numbers "0" to "4" and "6" to "11" (or "12" to "16" and "18" to "23"). The number "5" (or "17") expresses the omitted position at which a detected portion 38 is not located.

The plurality of detected portions 38 are positioned at equal intervals or at practically equal intervals in a peripheral direction of the crankshaft 15. An angular interval 2θ, between the two detected portions 38 located at the two positions (the two positions of the numbers "4" and "6" or the two positions of the numbers "16" and "18") that are mutually adjacent in the peripheral direction across the omitted position (the number "5" or "17"), is twice the measurement angle θ. Detection of a reference position (reference crank position) in one rotation of the crankshaft 15 is enabled because one of the plurality of intervals formed by the plurality of detected portions 38 differs thus from the other intervals. A detection signal, generated by the electromagnetic pickup 50 in correspondence to the reference position, that is, the omitted position that is assigned the number "5" and "17," is a reference detection signal.

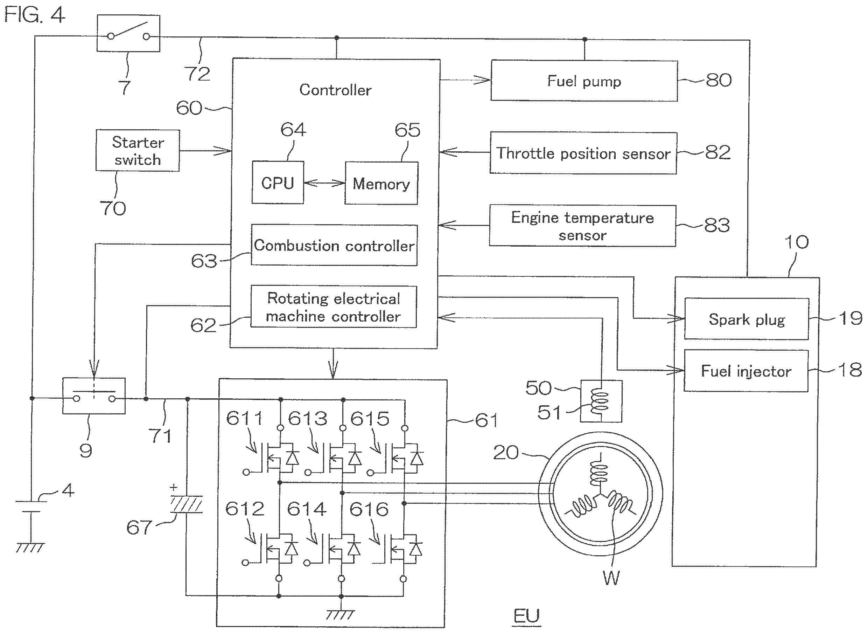

FIG. 4 is a block diagram of the general electrical configuration of the straddled vehicle 1 that includes the engine unit EU. The engine unit EU is provided with a controller 60 and an inverter 61. The controller 60 controls respective portions of the straddled vehicle 1, including the inverter 61.

The rotating electrical machine 20 and the battery 4 are connected to the inverter 61. When the rotating electrical machine 20 functions as the generator, the electric power generated by the rotating electrical machine 20 is supplied to the battery 4 through the inverter 61 and through a power supply line 71. The battery 4 is thereby charged by the electric power generated by the rotating electrical machine 20. When the rotating electrical machine 20 is used as the starter motor, the battery 4 supplies electric power to the rotating electrical machine 20 from the power supply line 71 and through the inverter 61. A main relay 9 is interposed in the power supply line 71. The battery 4 is thus connected to the inverter 61 through the main relay 9. The main relay 9 is opened and closed by the controller 60.

The inverter 61 includes a plurality (for example, six) of switching devices 611 to 616. The switching devices 611 to 616 constitute a three-phase bridge inverter. The stator windings W are connected to the switching devices 611 to 616. The plurality of switching devices 611 to 616 are connected to the respective phases of the stator windings W of the plurality of phases. In more detail, of the plurality of switching devices 611 to 616, two switching devices that are connected in series constitute a half bridge. The half bridges of the respective phases are connected in parallel with respect to the battery 4. The switching devices 611 to 616 constituting the half bridges of the respective phases are respectively connected to the respective phases of the stator windings W of the plurality of phases. Each of the switching devices 611 to 616 is, for example, a transistor and, in more detail, is an FET (field effect transistor) or an IGBT (insulated gate bipolar transistor), etc.

The switching devices 611 to 616 control passing and interruption of current between the stator windings W of the plurality of phases and the battery 4.

When the rotating electrical machine 20 functions as the motor, respective energization and stop of energization of the stator windings W of the plurality of phases are switched by on/off of the switching devices 611 to 616.

When the rotating electrical machine 20 functions as the generator, switching between passing and interruption of current between each of the stator windings W and the battery 4 is performed by on/off operations of the switching devices 611 to 616. Rectification and voltage control of the three-phase AC output from the rotating electrical machine 20 are performed by successively switching on/off the switching devices 611 to 616. The switching devices 611 to 616 thus control the current output from the rotating electrical machine 20 to the battery 4 and electric components.

In such a power generation operation, a capacitor 67 connected to the power supply line 71 smoothens the voltage led out to the power supply line 71 when the rotating electrical machine 20 performs the power generation operation.

The controller 60 is connected to and controls the fuel injector 18 and the spark plug 19, which are the electric components included in the engine 10. Also, the controller 60 is connected to and controls operation of a fuel pump 80. The fuel pump 80 supplies fuel from an unillustrated fuel tank to the fuel injector 18.

Also, the electromagnetic pickup 50 is connected to and the detection signals generated by the electromagnetic pickup 50 are input into the controller 60. Further, a throttle position sensor 82 and an engine temperature sensor 83 are connected to and detection signals of the throttle position sensor 82 and the engine temperature sensor 83 are input into the controller 60. The throttle position sensor 82 detects a valve position, that is, the throttle opening of the throttle valve TV. The throttle valve TV is operated by the accelerator operating member 8 and therefore the throttle position sensor 82 is able to detect the operation of the accelerator operating member 8. The engine temperature sensor 83 detects a temperature of the engine 10 as an engine temperature. The engine temperature sensor 83 is located in a vicinity of the engine 10. If the engine 10 is a water-cooled engine, the engine temperature sensor 83 may detect a temperature of cooling water as an alternate index of an engine temperature.

Further, a starter switch 70, operated by the user in starting the engine 10, is connected to the controller 60. Upon detecting operation of the starter switch 70, the controller 60 executes a start cranking control that includes drive of the rotating electrical machine 20.

The electric power of the battery 4 is supplied through a power supply line 72 to the controller 60 and further supplied to the electric components, such as the fuel pump 80, the fuel injector 18, the spark plug 19, etc. A main switch 7 is interposed in the power supply line 72. The main switch 7 is a switch that is operated to be conducting by the user in beginning use of the straddled vehicle 1 and operated to be interrupted by the user in ending the use of the straddled vehicle 1.

When the main switch 7 is made conducting, the controller 60, the fuel pump 80, the fuel injector 18, the spark plug 19, etc., are connected to the battery 4 and made operable. Also, if, when the main switch 7 is conducting, the main relay 9 is also conducting, the electric power generated by the rotating electrical machine 20 is suppliable through the power supply lines 71 and 72 to the controller 60, the fuel pump 80, the fuel injector 18, the spark plug 19, etc.

The controller 60 is further connected, between the main relay 9 and the inverter 61, to the power supply line 71. Therefore, even when the main relay 9 is interrupted, the controller 60 is able to receive the electric power generated by the rotating electrical machine 20. When supplied with electric power and operable, the controller 60 controls the opening and closing of the main relay 9.

The controller 60 includes a rotating electrical machine controller 62 and a combustion controller 63.

The combustion controller 63 of the controller 60 controls the engine 10. The rotating electrical machine controller 62 controls the rotating electrical machine 20. Specifically, the rotating electrical machine controller 62 controls the inverter 61. The rotating electrical machine controller 62 thereby controls drive operation and power generation operation of the rotating electrical machine 20.

The combustion controller 63 controls the combustion operation of the engine 10. By controlling the combustion operation of the engine 10, the combustion controller 63 controls the output of the engine 10. More specifically, the combustion controller 63 controls the spark plug 19 and the fuel injector 18.

The rotating electrical machine controller 62 controls the current flowing between the battery 4 and the rotating electrical machine 20 through the power supply line 71 by controlling the plurality of switching devices 611 to 616 included in the inverter 61. The rotating electrical machine controller 62 controls the respective on/off operations of the switching devices 611 to 616 to control the operation of the rotating electrical machine 20.

The controller 60 is arranged by a computer having a processor (CPU) 64 and a memory 65 (storage device). The memory 65 stores data related to programs and calculations. The CPU 64 performs calculation processing based on a control program and data stored in the memory 65. Functions of the rotating electrical machine controller 62 and the combustion controller 63 are realized by the CPU 64 executing the control program. Respective operations by the rotating electrical machine controller 62 and the combustion controller 63 are thus specifically, operations of the controller 60 having the form of the computer.

The controller 60 is capable of executing a power generation control by controlling the inverter 61. The power generation control is, specifically, an on/off control of the switching devices 611 to 616. In the present preferred embodiment, the power generation control includes a phase control and a vector control.

The phase control is an on/off control of the switching devices 611 to 616 by a phase control method. With the phase control method, the switching devices 611 to 616 are switched on/off by control signals of the same frequency as an induced voltage output from each of the stator windings W of the rotating electrical machine 20. Relative phases of the on/off operations of the switching devices 611 to 616 are controlled with respect to phases of induction voltage waveforms output from the stator windings W. Currents flowing through the stator windings W are thereby chopped, thus enabling the voltage generated by the rotating electrical machine 20 to be boosted or dropped. That is, it is possible to configure a boosting chopper circuit or a dropping chopper circuit by the stator windings W and the switching devices 611 to 616 and parasitic diodes of the switching devices 611 to 616. The capacitor 67 reduces ripple currents due to the on/off of the switching devices 611 to 616.

The vector control is an on/off control of the switching devices 611 to 616 by a vector control method. With the vector control method, the switching devices 611 to 616 are on/off controlled in accordance with signals that are pulse width modulated by signals of higher frequency than the frequency of the induced voltage output from each of the stator windings W of the rotating electrical machine 20. The pulse width modulation is performed such that sine wave currents are output from the stator windings W. With the vector control method, a boosting chopper circuit is configured using the stator windings W and the switching devices 611 to 616 and the parasitic diodes of the switching devices 611 to 616 and the voltage generated by the stator windings W is thereby boosted. The sine wave currents that are actually output contain ripple currents due to the on/off operations of the switching devices 611 to 616. The ripple currents are reduced by the capacitor 67. With the vector control method, the currents are chopped at a higher frequency than with the phase control method, thus enabling a boosting effect to be obtained at a higher efficiency than the phase control method. The vector control method is thus also higher in power generation efficiency than the phase control method.

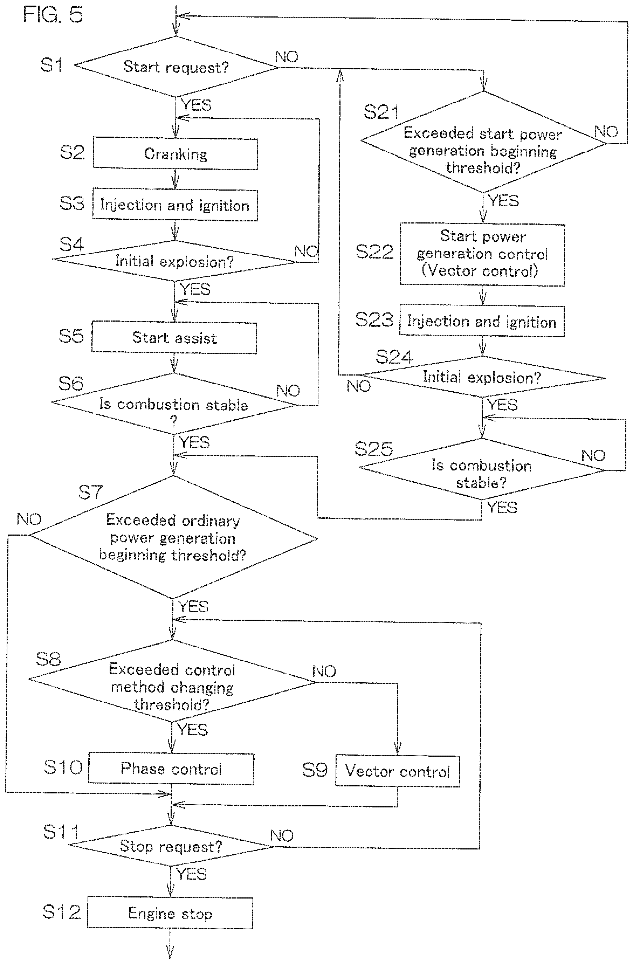

FIG. 5 is a flowchart for describing an example of the start control of the engine 10 and the power generation control of the rotating electrical machine 20. When use of the straddled vehicle 1 is begun, the user turns on the main switch 7. Electric power is thereby supplied from the battery 4 to the controller 60 and the controller 60 begins processing. The controller 60 turns on the main relay 9 to connect the battery 4 and the inverter 61.

The controller 60 judges whether or not a start request is present (step S1). Specifically, the controller 60 judges that the start request is present when the starter switch 70 is operated. The controller 60 also judges that the start request is present when a restart condition is established in the idle stop state. The restart condition is, for example, an operation of the accelerator operating member 8 and is detected by the throttle position sensor 82. The restart condition may also include that the starter switch 70 is operated. Therefore, when the starter switch 70 is operated in the idle stop state, it is judged that the start request is present.

If the start request is present (step S1: YES), the controller 60 controls the switching devices 611 to 616 of the inverter 61 to drive the rotating electrical machine 20. Cranking that rotates the crankshaft 15 in the forward rotation direction is thereby performed (step S2). A rotational speed (cranking rotational speed) of the crankshaft 15 in the cranking is, for example, approximately 650 rpm. When the crankshaft 15 begins to rotate, the electromagnetic pickup 50 generates the detection signals and the controller 60 then performs waveform shaping of the detection signals to obtain crank pulses. Brushless drive control of the rotating electrical machine 20 is performed based on the crank pulses.

Further, the controller 60 executes an injection control and an ignition control (step S3). The injection control is a control of making the fuel be injected from the fuel injector 18 when the crankshaft 15 is at an injection position. The ignition control is a control of making the spark plug 19 generate the spark discharge when the crankshaft 15 is at an ignition position. By the cranking being begun, the electromagnetic pickup 50 generates the detection signals that are then waveform-shaped to obtain the crank pulses. The controller 60 detects the omitted position as the reference crank position and detects the injection position and the ignition position by counting the crank pulses from the reference crank position. The injection position is, for example, the rotational position of the crankshaft 15 when the detected portion 38 of the number "8," shown in FIG. 3, is detected by the electromagnetic pickup 50. The ignition position is, for example, the rotational position of the crankshaft 15 when the detected portion 38 of the number "0," shown in FIG. 3, is detected by the electromagnetic pickup 50 and is set in a vicinity of the compression top dead center position.

The controller 60 monitors a rotational speed of the crankshaft 15, that is, an engine speed based on intervals of the crank pulses. When the engine speed reaches an initial explosion rotational speed (step S4: YES), the controller 60 judges that an initial explosion has occurred in the engine 10 and the engine 10 has started.

The controller 60 executes a start assist control of continuing the drive of the rotating electrical machine 20 even after the start of the engine 10 (step S5). The controller 60 judges, based on the engine speed, whether or not the combustion by the engine 10 has stabilized and continues the start assist control until the combustion stabilizes (step S6).

When the combustion by the engine 10 stabilizes (step S6: YES), the controller 60 judges whether or not the engine speed exceeds an ordinary power generation beginning threshold (step S7). The ordinary power generation beginning threshold is, for example, set to a value higher than a cranking rotational speed (of, for example, 650 rpm). Also, the ordinary power generation beginning threshold is set, for example, to a value lower than an idling rotational speed (of, for example, 1300 rpm). The ordinary power generation beginning threshold may, for example, be set to approximately 1200 rpm.

When the engine speed exceeds the ordinary power generation beginning threshold (step S7: YES), the controller 60 begins an ordinary power generation control (steps S8 to S10). The power generation control is a control of switching on/off the switching devices 611 to 616 of the inverter 61 to control a current flowing between the power supply line 71 and the rotating electrical machine 20 to thereby perform efficient power generation. If the power generation control is not performed, all of the switching devices 611 to 616 are put in interrupted states and an AC electric power generated by the rotating electrical machine 20 is rectified by parasitic diodes of the switching devices 611 to 616 and led out to the power supply line 71.

The ordinary power generation control includes the vector control (step S9) and the phase control (step S10) described above. The controller 60 judges whether or not the engine speed exceeds a control method changing threshold (step S8). The control method changing threshold may be equal to or may be higher than the idling rotational speed (of, for example, 1300 rpm). If the engine speed is not more than the control method changing threshold (step S8: NO), the controller 60 executes the vector control (step S9). If the engine speed exceeds the control method changing threshold (step S8: YES), the controller 60 executes the phase control (step S10).

During running of the engine 10, the controller 60 judges whether or not a stop request is present (step S11). Specifically, if the main switch 7 is switched off, the controller 60 judges that the stop request, requesting that the engine 10 be stopped, is present. Also, if an idle stop control is to be performed, the controller 60 judges that the stop request, requesting that the engine 10 be stopped, is present if an idle stop condition is satisfied. If the stop request is present (step S11: YES), the controller 60 ends the injection control and the ignition control to stop the engine 10 (step S12). If the stop request is due to the switching off of the main switch 7, the controller 60 turns off the main relay 9 and ends the processing. If the stop request is due to the satisfying of the idle stop condition, the controller 60 keeps the main relay 9 in the conducting state and waits for satisfying of a restart condition. If the stop request is not present (step S11: NO), the running of the engine 10 is continued and the ordinary power generation control (steps S8 to S10) is continued.

If the start request is not present (step S1: NO), the controller 60 judges whether or not the engine speed has exceeded a start power generation beginning threshold (step S21). The start power generation beginning threshold is set to a value not less than 0 and less than the cranking rotational speed (or not more than the cranking rotational speed) and may, for example, be 600 rpm. If the engine speed exceeds the start power generation beginning threshold despite the cranking (step S2) by the rotating electrical machine 20 not being executed, the external force other than the rotating force of the rotating electrical machine 20 is being applied to the crankshaft 15. Specifically, this corresponds to a case where the kick starter 90 is operated.

If the engine speed exceeds the start power generation beginning threshold (step S21: YES), the controller 60 executes a start power generation control (step S22). The start power generation control is thus executed in a start power generation region of not more than the cranking rotational speed. The engine speed is low and therefore the start power generation control is preferably control by the vector control method, that is, the vector control. This is because the rotational speed of the rotating electrical machine 20 is low and a generated voltage is correspondingly low. By performing the vector control, generation of a voltage not less than an ordinary battery voltage is enabled. The start power generation control may be control by the phase control method, that is, the phase control. This is because power generation efficiency is satisfactory in comparison to a case of not performing power generation control and a boosting action is also provided. However, the vector control is higher in boosting action and better in power generation efficiency than the phase control, and therefore the vector control is more preferable.

On the other hand, the controller 60 executes the injection control and the ignition control (step S23). Further, the controller 60 monitors the engine speed based on the intervals of the crank pulses and, when the engine speed reaches the initial explosion rotational speed, judges that the initial explosion has occurred and the engine 10 has started (step S24: YES).

When the engine 10 is started by the external force other than the rotating force of the rotating electrical machine 20, the controller 60 does not perform the start assist control (see step S5). When the engine 10 starts (step S24: YES), the controller 60 judges, based on the engine speed, whether or not the combustion by the engine 10 has stabilized (step S25).

When the combustion by the engine 10 stabilizes (step S25: YES), the controller 60 judges whether or not the engine speed has exceeded the ordinary power generation beginning threshold (step S7). If the engine speed exceeds the ordinary power generation beginning threshold (step S7: YES), transition to the ordinary power generation control is performed. That is, the vector control (step S9) or the phase control (step S10) is performed based on the control method changing threshold (step S8).

When the battery 4 is degraded and significantly decreased in charging capacity, an operating voltage is not supplied to the controller 60 even when the main switch 7 is made to conduct. Obviously, the drive of the rotating electrical machine 20 is also impossible. In such a case, the user operates the kick starter 90 to start the engine 10 in the state where the main switch 7 is made to conduct.

By the crankshaft 15 being rotated by the kick starter 90, the rotating electrical machine 20 generates an AC voltage (induced voltage). By actions of the parasitic diodes of the switching devices 611 to 616, the AC voltage is full-wave rectified to a DC voltage and led out to the power supply line 71. The operating voltage is thus supplied from the power supply line 71 to the controller 60.

Upon beginning operation, the controller 60 makes the main relay 9 conducting. The controller 60 monitors the engine speed and, if the engine speed exceeds the start power generation beginning threshold (step S21: YES), begins the start power generation control (step S22), and executes the power generation control in the start power generation region. Efficient power generation is thereby performed and the generated electric power is supplied through the power supply lines 71 and 72 and the main switch 7 to the controller 60, the fuel injector 18, the spark plug 19, the fuel pump 80, etc.

The controller 60 performs waveform rectification of the detection signals input from the electromagnetic pickup 50 to obtain the crank pulses. Based on the crank pulses, the controller 60 controls the switching devices 611 to 616, actuates the fuel pump 80, and controls the fuel injector 18 and the spark plug 19. The controller 60 thus performs the start control for starting the engine 10 (see step S23).

The controller 60 begins the power generation control (preferably, the vector control) from a low rotation region less than the cranking rotational speed and therefore the necessary electric power is supplied to the electric components from the point at which the kick starter 90 is operated until completion of the start (initial explosion) of the engine 10. If the power generation control is not performed, the voltage led out to the power supply line 71 would decrease in a short time and, the controller 60 would reset itself accordingly. Start of the engine 10 would thereby be disabled. The configuration of the present preferred embodiment enables the engine 10 to be started easily by the kick starter 90 without giving rise to such problems.

It may be assumed that, when the engine 10 is started by the external force other than the rotating force of the rotating electrical machine 20, the battery 4 is degraded or a remaining amount of the battery 4 is decreased. It is therefore preferable to prohibit idle stop when the engine 10 is started by the external force other than the rotating force of the rotating electrical machine 20.

In the straddled vehicle 1, due to limited installation space, the rotating electrical machine 20 that is used in common as the starter motor and the generator is required to be configured as compactly as possible. Due to this requirement, a power generation performance when using the rotating electrical machine 20 as the generator would become insufficient, especially in a low rotation region, if an attempt is made to secure a driving torque required to use the rotating electrical machine 20 as the starter motor.

When attempting to start the engine 10 by rotating the crankshaft 15 by the kick starter 90, it is not possible to rotate the crankshaft 15 at as high a speed as the rotating electrical machine 20 is capable of and it is thus difficult to start the engine 10 when the battery 4 is degraded.

Thus, with the present preferred embodiment, the controller 60 begins the start power generation control in response to the rotational speed of the crankshaft 15 exceeding the start power generation beginning threshold that is not more than or less than the cranking rotational speed enabled by the rotating electrical machine 20. Efficient power generation is thereby enabled even when the rotational speed of the crankshaft 15 is low, that is, even in the start power generation region of not more than or less than the cranking rotational speed.

Specifically, control of the switching devices 611 to 616 of the inverter 61 enables a comparatively high voltage to be led out continuously to the power supply lines 71 and 72 even when the rotational speed of the crankshaft 15 is low. The electric power generated by the rotating electrical machine 20 is supplied to the controller 60, the fuel pump 80, and the fuel injector 18 and the spark plug 19 of the engine 10, etc., through the power supply lines 71 and 72. This enables the engine 10 to be started. Facilitation of the engine start by the kick starter 90, which applies the external force other than the rotating force of the rotating electrical machine 20 to the crankshaft 15, is thus attained.

Also, with the present preferred embodiment, the ordinary power generation control is executed when the engine speed exceeds the ordinary power generation beginning threshold (of, for example, 1200 rpm). Also, with the ordinary power generation control, the vector control is performed in a region of the engine speed up to the control method changing threshold and the phase control is performed in a region exceeding the control method changing threshold. Whereas the vector control of high power generation efficiency is advantageous in a low speed region, a need to boost the voltage generated by the rotating electrical machine 20 decreases and the voltage may even need to be dropped in a high speed region. The phase control method is thus more appropriate in the high speed region.

When the cranking by the rotating electrical machine 20 is performed, the start power generation control (see step S22) is not performed and the ordinary power generation control is begun when the engine speed exceeds the ordinary power generation beginning threshold. The ordinary power generation beginning threshold is set to not less than the cranking rotational speed. Therefore, when the rotating electrical machine 20 is used as the starter motor, the power generation control is begun after the start of the engine 10 is completed. The interference of the drive control of the rotating electrical machine 20 by the power generation control is thereby avoided and smooth start is made possible.

Also, with the present preferred embodiment, the start assist control (see step S5), of continuing the drive of the rotating electrical machine 20 even after the engine 10 begins the combustion, is not executed when the engine 10 is started by the kick starter 90. When the start of the engine 10 using the kick starter 90 is attempted, it may be considered that the battery 4 is degraded. Thus, further depletion of the battery 4 is avoided by not performing the start assist control.

Also, with the present preferred embodiment, rotation information of the rotor 30 of the rotating electrical machine 20, that is, position information of the crankshaft 15 is acquired using the electromagnetic pickup 50, and therefore the configuration is inexpensive in comparison to a case of using a position sensor, such as a Hall IC. Performing of power generation control is enabled by such an inexpensive configuration, and facilitation of the start performed by rotating the crankshaft 15 by the kick starter 90 is enabled.

Although the preferred embodiment has been described above, the present teaching may be implemented in yet other modes.

For example, although with the preferred embodiment described above, the start power generation control is begun when the engine speed exceeds the start power generation beginning threshold, a judgment related to such a threshold does not necessarily have to be performed. For example, the start power generation control may be executed as soon as the crankshaft 15 is rotated by the external force other than the rotating force of the rotating electrical machine 20 and the controller 60 begins processing accordingly.

Also, the start power generation control that is begun in response to the engine speed exceeding the start power generation beginning threshold may be continued even after the engine speed becomes not more than or less than the start power generation beginning threshold.

Also, although with the preferred embodiment described above, an example where the crankshaft 15 is rotated by the kick starter 90 is described, there may be cases besides this where the start of the engine is attempted by rotating the crankshaft by an external force other than the rotating force of the rotating electrical machine. For example, in a push start of a motorcycle, etc., the crankshaft is rotated by an external force from wheels.

Also, although with the preferred embodiment described above, the controller 60 judges whether or not the engine speed exceeds the respective thresholds (steps S7, S8, S21, etc.), it may be judged whether or not the engine speed has reached a corresponding threshold. There is no practical difference between either type of judgment.

Also, with the preferred embodiment described above, the reference detection signal is generated when the omitted position on the rotor 30 passes the electromagnetic pickup 50. However, the location of the detected portion for generating the reference detection signal is not restricted to this location. For example, one reference detected portion that differs in length in the peripheral direction of the rotor 30 from the other detected portions may be provided.

To obtain the rotation information of the rotor 30, a rotation angle sensor, such as a Hall IC, etc., may be used in place of the electromagnetic pickup 50.

Although with the preferred embodiment described above, the single-cylinder, four-stroke engine was taken up as an example, the present teaching may also be applied to a four-stroke engine having multiple cylinders.

Further, although with the preferred embodiment described above, the straddled vehicle having the two wheels 3a and 3b at the front and rear was taken up as an example, the present teaching may also be applied to straddled vehicles of other forms, such as a straddled vehicle having thee wheels, etc.

## Claims

1. A method for controlling an engine unit (EU) for a straddled vehicle (1), the engine unit (EU) comprises an engine (10) having a crankshaft (15) and an electric component (18, 19);
a rotating electrical machine (20) power-transmittably coupled to the crankshaft (15) and configured to be used in common as a starter motor for rotating the crankshaft (15) and as a generator for generating electric power by a rotating force of the crankshaft (15);
a power supply line (71, 72) that is connected to a battery (4), and that is connected to the electric component (18, 19);
an inverter (61) including a plurality of switching devices (611 to 616) configured to control a current flowing between the power supply line (71, 72) and the rotating electrical machine (20);
the method comprises:
executing a power generation control (S8, S9, S22) of controlling the plurality of switching devices (611 to 616) of the inverter (61) to make the rotating electrical machine (20) perform power generation, and
executing, when the crankshaft (15) is rotated by a manual starter (90) that applies an external force other than a rotating force of the rotating electrical machine (20) with the engine (10) being in a stop state, the power generation control (S22) in a start power generation region in which a rotational speed of the crankshaft (15) is not more than a cranking rotational speed in rotation by the rotating electrical machine (20), wherein the power generation control includes a vector control (S9, S22) of controlling the plurality of switching devices (611 to 616) included in the inverter (61) by a vector control method to boost the voltage generated by the rotating electrical machine (20) and lead out the thus boosted voltage, to the power supply line (71, 72), and
the power generation control includes a phase control (S10) of controlling the plurality of switching devices (611 to 616) included in the inverter (61) by a phase control method, wherein the vector control is performed in a region of the engine speed up to a control method changing threshold and the phase control is performed in a region exceeding the control method changing threshold, and switching from the vector control (S9) to the phase control (S10) in response (S8) to the rotational speed of the crankshaft (15) reaching or exceeding the control method changing threshold that is greater than the cranking rotational speed.

2. The method according to claim 1, further comprises
executing, in a period immediately after the engine (10) begins combustion when the engine (10) is started by drive of the rotating electrical machine (20), a start assist control (S5) of continuing the drive of the rotating electrical machine (20) to assist the rotation of the crankshaft (15) until a running state of the engine (10) reaches a predetermined stable state, and
not performing the start assist control (S5) when the engine (10) is started by the crankshaft (15) being rotated by the manual starter (90) that applies the external force other than the rotating force of the rotating electrical machine (20).

3. The method according to claim 1 or 2, further comprises
beginning, when the engine (10) is started by the drive of the rotating electrical machine (20) with the engine (10) being in the stop state, the power generation control (S22) in response (S21) to the rotational speed of the crankshaft (15) reaching or exceeding an ordinary power generation beginning threshold that is determined to be not less than the cranking rotational speed in rotation by the rotating electrical machine (20).

4. The method according to any one of claims 1 to 3, wherein engine unit (EU) further comprises a rotor (30) that is configured to rotate together with the rotation of the crankshaft (15); and
an electromagnetic pickup (50), having a detection region in a region through which a plurality of detected portions (38) pass, for generating detection signals in accompaniment with passage of the detected portions (38) through the detection region, the detected portions (38) being arranged at intervals in a rotation direction of the rotor (30); wherein the power generation control (S9, S10, S22) is executed using the detection signals generated by the electromagnetic pickup (50).

5. An engine unit (EU) for a straddled vehicle (1) according to the features the engine unit of at least one of the claims 1 to 4, a cylinder (12) and a controller (60) configured to control the engine (10) and the inverter (61);
wherein the controller (60) is configured to execute the method according to at least one of the claims 1 to 4.

6. The engine unit (EU) according to claim 5, wherein the electric component (18, 19) includes an ignition device (19) and a fuel supply device (18).

7. A straddled vehicle (1) comprising:
the engine unit (EU) according to any one of Claims 5 or 6;
a wheel (3b) to which the rotation of the crankshaft (15) is transmitted; and
a straddled seat (5).

8. The straddled vehicle (1) according to claim 7, wherein the battery (4) is included in the straddled vehicle (1).

## Patentansprüche

1. Ein Verfahren zum Steuern einer Motor-Einheit (EU) für ein Spreiz-Sitz-Fahrzeug (1), die Motor-Einheit (EU) umfasst einen Motor (10) mit einer Kurbel-Welle (15) und ein elektrisches Bauteil (18, 19);
eine rotierende elektrische Maschine (20), die kraftübertragend mit der Kurbel-Welle (15) gekoppelt ist und konfiguriert ist, um gemeinsam als ein Starter-Motor zum Drehen der Kurbel-Welle (15) und als ein Generator zum Erzeugen von elektrischer Energie durch eine Drehkraft der Kurbel-Welle (15) verwendet zu werden;
eine Strom-Zufuhr-Leitung (71, 72), die mit einer Batterie (4) verbunden ist, und die mit dem elektrischen Bauteil (18, 19) verbunden ist;
einen Wechselrichter (61), der eine Mehrzahl von Schalt-Vorrichtungen (611 bis 616) enthält, die konfiguriert sind, um einen Strom, der zwischen der Strom-Zufuhr-Leitung (71, 72) und der rotierenden elektrischen Maschine (20) fließt, zu steuern;
das Verfahren umfasst:
Ausführen einer Strom-Erzeugungs-Steuerung (S8, S9, S22) zum Steuern der Mehrzahl von Schalt-Vorrichtungen (611 bis 616) des Wechselrichters (61), um die rotierende elektrische Maschine (20) zur Strom-Erzeugung zu veranlassen, und
Ausführen, wenn die Kurbel-Welle (15) durch einen manuellen Starter (90) gedreht wird, der eine äußere Kraft aufbringt, die von einer Drehkraft der rotierenden elektrischen Maschine (20) verschieden ist, wobei sich der Motor (10) in einem Stopp-Zustand befindet, der Strom-Erzeugungs-Steuerung (S22) in einem Start-Strom-Erzeugungs-Bereich, in dem eine Drehzahl der Kurbel-Welle (15) nicht größer als eine Kurbel-Drehzahl bei der Drehung durch die rotierende elektrische Maschine (20) ist, wobei die Strom-Erzeugungs-Steuerung eine Vektor-Steuerung (S9, S22) zum Steuern der Mehrzahl von Schalt-Vorrichtungen (611 bis 616), die in dem Wechselrichter (61) enthalten sind, durch ein Vektor-Steuerungs-Verfahren umfasst, um die Spannung, die von der rotierenden elektrischen Maschine (20) erzeugt ist, zu erhöhen und die so erhöhte Spannung zu der Strom-Zufuhr-Leitung (71, 72) herauszuführen, und
die Strom-Erzeugungs-Steuerung eine Phasen-Steuerung (S10) zum Steuern der Mehrzahl von Schalt-Vorrichtungen (611 bis 616), die in dem Wechselrichter (61) enthalten sind, durch ein Phasen-Steuerungs-Verfahren umfasst, wobei die Vektor-Steuerung in einem Bereich der Motordrehzahl bis zu einer Steuer-Verfahren-Änderungs-Schwelle durchgeführt wird und die Phasen-Steuerung in einem Bereich, der die Steuer-Verfahren-Änderungs-Schwelle überschreitet, durchgeführt wird, und Umschalten von der Vektor-Steuerung (S9) auf die Phasen-Steuerung (S10) in Reaktion (S8) darauf, dass die Drehzahl der Kurbel-Welle (15) die Steuer-Verfahren-Änderungs-Schwelle erreicht oder überschreitet, die größer ist als die Kurbel-Drehzahl.

2. Das Verfahren gemäß Anspruch 1, das weiter umfasst
Ausführen, in einem Zeitraum unmittelbar nach dem der Motor (10) die Verbrennung beginnt, wenn der Motor (10) durch den Antrieb der rotierenden elektrischen Maschine (20) gestartet wird, einer Start-Unterstützungs-Steuerung (S5) um den Antrieb der rotierenden elektrischen Maschine (20) fortzusetzen, um die Drehung der Kurbel-Welle (15) zu unterstützen, bis ein Betriebszustand des Motors (10) einen vorbestimmten stabilen Zustand erreicht, und
die Start-Unterstützungs-Steuerung (S5) nicht auszuführen, wenn der Motor (10) durch die Kurbel-Welle (15), die durch den manuellen Starter (90) gedreht wird, der eine andere externe Kraft als die Drehkraft der rotierenden elektrischen Maschine (20) aufbringt, gestartet wird.

3. Das Verfahren gemäß Anspruch 1 oder 2, das weiter umfasst
Beginnen, wenn der Motor (10) durch den Antrieb der rotierenden elektrischen Maschine (20) gestartet wird, wobei sich der Motor (10) im Stopp-Zustand befindet, der Strom-Erzeugungs-Steuerung (S22) in Reaktion (S21) darauf, dass die Drehzahl der Kurbel-Welle (15) eine gewöhnlichen Strom-Erzeugungs-Beginn-Schwelle erreicht oder überschreitet, die bestimmt ist, so dass er nicht kleiner ist als die Kurbel-Rotations-Geschwindigkeit bei der Rotation durch die rotierende elektrische Maschine (20).

4. Das Verfahren gemäß irgendeinem der Ansprüche 1 bis 3, wobei die Motor-Einheit (EU) weiterhin einen Rotor (30) umfasst, der konfiguriert ist, um sich zusammen mit der Drehung der Kurbel-Welle (15) zu drehen; und
einen elektromagnetischen Aufnehmer (50), der einen Erfassungsbereich in einem Bereich hat, durch den eine Mehrzahl von erfassten Abschnitten (38) hindurchgeht, zum Erzeugen von Erfassungs-Signalen in Begleitung des Durchgangs der erfassten Abschnitte (38) durch den Erfassungsbereich, die erfassten Abschnitte (38) sind in Intervallen in einer Drehrichtung des Rotors (30) angeordnet; wobei die Strom-Erzeugungs-Steuerung (S9, S10, S22) unter Verwendung der Erfassungs-Signale, die von dem elektromagnetischen Aufnehmer (50) erzeugt sind, ausgeführt wird.

5. Eine Motor-Einheit (EU) für ein Spreiz-Sitz-Fahrzeug (1) gemäß den Merkmalen der Motor-Einheit von mindestens einem der Ansprüche 1 bis 4, einem Zylinder (12) und einer Steuerung (60), die konfiguriert ist, um den Motor (10) und den Wechselrichter (61) zu steuern;
wobei die Steuerung (60) konfiguriert ist, um das Verfahren nach mindestens einem der Ansprüche 1 bis 4 auszuführen.

6. Die Motor-Einheit (EU) gemäß Anspruch 5, wobei die elektrische Komponente (18, 19) eine Zünd-Vorrichtung (19) und eine Kraftstoff-Zufuhr-Vorrichtung (18) beinhaltet.

7. Ein Spreiz-Sitz-Fahrzeug (1), das umfasst:
die Motor-Einheit (EU) gemäß irgendeinem der Ansprüche 5 oder 6;
ein Rad (3b), auf das die Drehung der Kurbel-Welle (15) übertragen wird; und
einen Spreiz-Sitz (5).

8. Das Spreiz-Sitz-Fahrzeug (1) gemäß Anspruch 7, wobei die Batterie (4) in dem Spreiz-Sitz-Fahrzeug (1) enthalten ist.

## Revendications

1. Procédé de commande d'une unité moteur (UE) pour un véhicule à enfourcher (1), l'unité moteur (EU) comprend un moteur (10) ayant un vilebrequin (15) et un composant électrique (18, 19) ;
une machine électrique rotative (20) couplée pour transmission de puissance au vilebrequin (15) et configurée pour être utilisée en commun en tant que démarreur moteur pour faire tourner le vilebrequin (15) et en tant que générateur pour générer de la puissance électrique par une force de rotation du vilebrequin (15) ;
une ligne d'alimentation en puissance (71, 72) qui est connectée à une batterie (4), et qui est connectée au composant électrique (18, 19) ;
un onduleur (61) comprenant une pluralité de dispositifs de commutation (611 à 616) configurés pour commander un courant circulant entre la ligne d'alimentation en puissance (71, 72) et la machine électrique rotative (20) ;
le procédé comprend :
l'exécution d'une commande de génération de puissance (S8, S9, S22) pour commander la pluralité de dispositifs de commutation (611 à 616) de l'onduleur (61) afin d'amener la machine électrique rotative (20) à effectuer une génération de puissance, et
l'exécution, lorsque le vilebrequin (15) est mis en rotation par un démarreur manuel (90) qui applique une force externe autre qu'une force de rotation de la machine électrique rotative (20) avec le moteur (10) qui est dans un état d'arrêt, de la commande de génération de puissance (S22) dans une région de génération de puissance de démarrage dans laquelle une vitesse de rotation du vilebrequin (15) n'est pas supérieure à une vitesse de rotation de lancement en rotation par la machine électrique rotative (20), dans lequel la commande de génération de puissance comprend une commande vectorielle (S9, S22) consistant à commander la pluralité de dispositifs de commutation (611 à 616) inclus dans l'onduleur (61) par un procédé de commande vectorielle pour augmenter la tension générée par la machine électrique rotative (20) et amener la tension ainsi augmentée, dans la ligne d'alimentation en puissance (71, 72), et la commande de génération de puissance comprend une commande de phase (S10) consistant à commander la pluralité de dispositifs de commutation (611 à 616) inclus dans l'onduleur (61) par un procédé de commande de phase, dans lequel la commande vectorielle est effectuée dans un région de l'accélération moteur jusqu'à un seuil de changement de procédé de commande et la commande de phase est effectuée dans une région dépassant le seuil de changement de procédé de commande, et à passer de la commande vectorielle (S9) à la commande de phase (S10) en réponse (S8) à la vitesse de rotation du vilebrequin (15) qui atteint ou dépasse le seuil de changement de procédé de commande qui est supérieur à la vitesse de rotation de lancement.

2. Procédé selon la revendication 1, comprend en outre les étapes consistant à exécuter, lors d'une période immédiatement après que le moteur (10) commence une combustion lorsque le moteur (10) est démarré par entraînement de la machine électrique rotative (20), une commande d'assistance au démarrage (S5) consistant à poursuivre l'entraînement de la machine électrique rotative (20) pour aider à la rotation du vilebrequin (15) jusqu'à ce qu'un état de fonctionnement du moteur (10) atteigne un état stable prédéterminé, et
ne pas effectuer la commande d'assistance au démarrage (S5) lorsque le moteur (10) est démarré par le vilebrequin (15) qui est mis en rotation par le démarreur manuel (90) qui applique la force externe autre que la force de rotation de la machine électrique rotative (20).

3. Procédé selon la revendication 1 ou 2, comprend en outre
l'initiation, lorsque le moteur (10) est démarré par l'entraînement de la machine électrique rotative (20) avec le moteur (10) qui est dans l'état d'arrêt, de la commande de génération de puissance (S22) en réponse (S21) à la vitesse de rotation du vilebrequin (15) qui atteint ou dépasse un seuil d'initiation de production de puissance ordinaire qui est déterminé comme n'étant pas inférieur à la vitesse de rotation de lancement en rotation par la machine électrique rotative (20).

4. Procédé selon l'une quelconque des revendications 1 à 3, dans lequel l'unité moteur (EU) comprend en outre un rotor (30) qui est configuré pour tourner conjointement avec la rotation du vilebrequin (15) ; et
un capteur électromagnétique (50), ayant une région de détection dans une région à travers laquelle passent une pluralité de parties détectées (38), pour générer des signaux de détection en accompagnement à un passage des parties détectées (38) à travers la région de détection, les parties détectées (38) étant disposées à intervalles dans une direction de rotation du rotor (30) ; dans lequel la commande de génération de puissance (S9, S10, S22) est exécutée en utilisant les signaux de détection générés par le capteur électromagnétique (50).

5. Unité de moteur (EU) pour un véhicule à enfourcher (1) conformément aux caractéristiques de l'unité moteur d'au moins l'une des revendications 1 à 4, un cylindre (12) et un dispositif de commande (60) configuré pour commander le moteur (10) et l'onduleur (61) ;
dans lequel le dispositif de commande (60) est configuré pour exécuter le procédé selon au moins l'une des revendications 1 à 4.

6. Unité moteur (EU) selon la revendication 5, dans laquelle le composant électrique (18, 19) comprend un dispositif d'allumage (19) et un dispositif d'alimentation en carburant (18).

7. Véhicule à enfourcher (1) comprenant :
l'unité moteur (EU) selon l'une quelconque des revendications 5 ou 6 ;
une roue (3b) à laquelle est transmise la rotation du vilebrequin (15) ; et
un siège à enfourcher (5).

8. Véhicule à enfourcher (1) selon la revendication 7, dans lequel la batterie (4) est incluse dans le véhicule à enfourcher (1).
